# EUROPEAN PATENT SPECIFICATION

(11) **EP 3 720 901 B1**
(45) Date of publication and mention of the grant of the patent: **09.02.2022**
(21) Application number: 18836734.6
(22) Date of filing: 05.12.2018
(51) Int. Cl.: C08J 5/24

(54) **RESIN COMPOSITIONS FOR LIQUID RESIN INFUSION AND APPLICATIONS THEREOF**
HARZZUSAMMENSETZUNGEN FÜR FLÜSSIGHARZINFUSION UND DEREN ANWENDUNGEN DAVON
COMPOSITIONS DE RÉSINE POUR INFUSION DE RÉSINE LIQUIDE ET LEURS APPLICATIONS

(30) Priority: 07.12.2017 GB 201720433
(43) Date of publication of application: 14.10.2020
(73) Proprietor: Cytec Industries Inc., Princeton, NJ 08540 (US)
(72) Inventor: MEEGAN, Jonathan, E., Upton Chester CH2 1LT (GB); BILLAUD, Claude, Marske-by-the-sea TS11 7DW (GB)
(74) Representative: Lederer & Keller Patentanwälte Partnerschaft mbB
(86) International application number: PCT/US2018/064064
(87) International publication number: WO 2019/113204

(56) References cited:
- EP-A1- 2 513 186
- WO-A1-2016/102411
- US-A1- 2014 135 443
- US-A1- 2016 152 763
- US-B2- 7 504 460
- US-B2- 9 039 951

## Description

### DETAILED DESCRIPTION

Fiber-reinforced composites that consist of reinforcement fibers embedded in a matrix resin have been used in the manufacturing of sporting goods as well as high-performance structures such as parts of airplanes and automobiles. Thermoset resins, particularly epoxy resins, have been widely used as matrix resins for such fiber-reinforced composites because of their desirable characteristics such as thermal and chemical resistance, adhesion and abrasion resistance. Curing agents that are widely used for curing epoxy resins include multifunctional amines.

Three-dimensional polymer composite parts can be manufactured using different methods, one of which is liquid molding. Resin Transfer Molding (RTM) and VARTM are examples of manufacturing processes that involve injecting a liquid resin into a fibrous preform. During the RTM process, the preform is placed into an enclosed mold cavity, and the resin is injected into the cavity under pressure. The mold with the preform is often put under vacuum so that the vacuum removes all the entrapped air in the preform and speeds up the RTM process. Once the liquid resin fills the mold cavity, the resin is cured, resulting in the formation of a composite part. VARTM is similar to RTM except that a single-sided tool is normally used with vacuum bagging, and vacuum pulls the liquid resin into the preform. These techniques are well suited for the manufacturing of very complex-shape parts, in many cases at reasonable production rates. The fiber architecture, permeability of the preform and the fabric crimps, resin viscosity, and temperature of operation have an influence on the wetting of the fabric. The liquid resin is typically chosen from a selection of chemistries including but not limited to epoxy-amine, epoxy-anhydride, bismaleimide and benzoxazine.

With reference to the epoxy-amine chemistry, the structure of a suitable multifunctional amine cure agent is, to an extent, dictated by the reactivity of the formulation to be achieved and the choice of a one- or two-component RTM methodology.

A one-component RTM formulation contains the curing agent, the epoxy resin and toughening agents in a single, infuse-able or injectable composition. With respect to the epoxy and amine components of the formulation, they typically form a single-phase, homogeneous composition prior to heating and injection of the resin composition into the fibrous preform. As such, special care needs to be given to the temperature at which the infiltration process is conducted (e.g., the tool temperature), the temperature at which the resin is stored and maintained in a container (or pot) in fluid communication with the mold (i.e., pot temperature) and the molecular structure of the curing agent (reactivity).

Suitable curing agents are amines represented by the generic formula below: 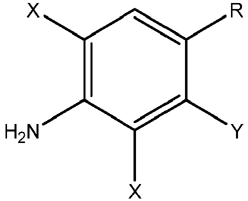 where there may be an electron withdrawing group at position R, X or Y, a steric blocking group at position X, or a combination of a steric blocking group at X and an electron withdrawing group at Y or R. Typical electron with drawing groups are given by, but not limited to, halogens or sulphones, and typical steric blocking groups are selected from, but not limited to, methyl, ethyl, propyl or isopropyl chains or derivatives thereof.

The substitution at the X, Y and R positions and the use of an aromatic ring may be selected to deactivate the lone pair of electrons on the amine functionality and increase the activation energy necessary for the curing reaction to take place. In turn, this means that the pot and tool temperatures can be chosen to favor higher temperatures which reduce resin viscosity and promote a swift, efficient and robust infiltration/infusion process with a minimum amount of reaction (e.g., curing) taking place in the resin pot or while the fibrous preform is being infiltrated/infused with resin.

The need to carefully select the appropriate curing agent to offer the decreased reactivity in the resin pot (pot-life) necessary for a single component RTM formulation or process often makes it difficult, or impossible to include certain amine compounds as curing agents without imposing process complexities. Process complexities may include, but are not limited to, pre-dissolution of the curing agent at elevated temperature before the resin infiltration point in order to work around the decrease in solubility or the increase in overall reactivity of the formulation due to the presence of certain aromatic amine compounds. Two such examples of aromatic amine compounds are 3,3'-DDS and CAF.

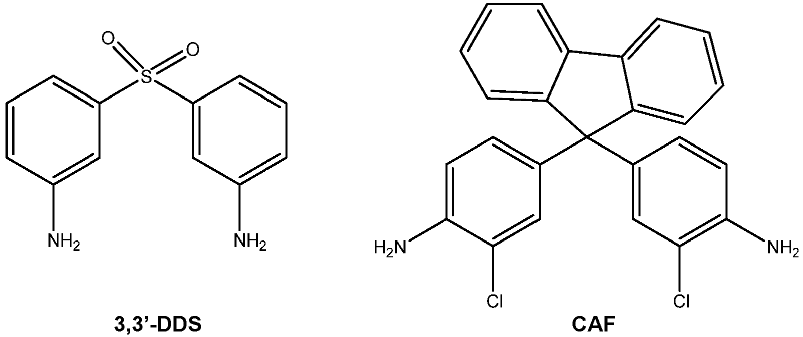

Two-component RTM processing allows for the epoxy resin component (which may optionally contain toughening agents) and the curative (i.e., hardener or curing agent) component (which may also contain optional toughening agents) to be physically separated from each other up until a point in the process, just before resin infiltration/injection, when the two components are mixed. While this technique offers an opportunity to broaden the options of compounds that can be combined together, care needs to be given to match the viscosity of the resin and hardener components for efficient mixing. In turn, this means that some hardener compounds could be excluded due to their melt viscosity or an incompatibility between the temperature required to melt the curative to achieve a compatible melt viscosity and the capability of the infusion equipment. Additionally, assuming that the curatives can be melted, it would be advantageous for the melt temperature to be as low as possible so a low melt viscosity is achieved at the lowest temperature possible. This would avoid the use of high temperatures to reach the melting point of the curative when the resin and curative components are mixed as such high temperatures could cause a premature reaction between the curative and resin in the resin composition at the mixing point prior the resin infusion.

One approach to promote low-temperature melting of the hardener and low-temperature mixing of hardener with epoxy resin(s) is to choose amine compounds that are liquid substances at room temperature. However, cured resin compositions containing these amine compounds are often mechanically inferior to compositions containing aromatic amines that are solids at room temperature. Another approach is to use a liquid amine (as a carrier) to carry a dissolved solid aromatic amine, but this approach is limited by the solubility of the dissolved component in the liquid carrier component. A third approach is to blend solid diamines to form a hardener of depressed / suppressed melting point that can be processed at lower temperature. Care needs to be taken to ensure that this hardener of suppressed / depressed melting point does not revert back to a crystalline form during the RTM process.

A solution is disclosed herein whereby a hardener of suppressed / depressed melting point is used to enable the inclusion of amine compounds that are normally deemed unsuitable for incorporation into RTM/VaRTM multi-component formulations due to their high melting point. Such solution provides an improvement in processability of the resin formulations for resin infusion.

One aspect of the present disclosure is directed to a two-component resin system having the following two major components: (A) a curative component containing a blend of at least three amine compounds; and (B) a thermosettable resin component containing one or more epoxy monomers, and optional additives, such as tougheners.

The amine blend (the curative component), has a T_{g} of -50°C to 150°C, in some embodiments, 0°C to 35°C, as determined by Differential Scanning Calorimetry (DSC) at ramp rate of 5°C/min.

Components (A) and (B) are physically separated from each other until the resin infusion process such as RTM or VaRTM is carried out. During RTM/VaRTM, these two components are combinable to form a substantially homogeneous or homogeneous mixture, which is then injected into a fibrous preform therein.

In some embodiments, the amine blend is in a glassy, amorphous phase at a temperature in the range of 20°C to 35 °C, in some embodiments, 25°C. The term "amorphous" refers to a non-crystalline solid that lacks the long-range order characteristic of a crystal. A crystalline solid has a sharp melting point, i.e., it changes into the liquid state at a definite temperature, which is easily identified using a technique such as DSC. On the contrary, an amorphous solid does not have a sharp melting point. Rather, the amorphous solid has a softening point or glass transition temperature at which it softens upon heating and starts to flow without undergoing any abrupt or sharp change from solid to liquid phase. The amorphous or glassy state of the amine compounds disclosed herein can be verified by DSC and the presence of a glass transition, without evidence of melting above the glass transition temperature.

The term "homogeneous" as used herein means having the same composition throughout, and the individual parts of the mixture are not easily identifiable, i.e., uniform composition and properties throughout. The term "substantially homogeneous" means more than 80% of mixture is homogeneous.

Generally, the stoichiometry for components (A) and (B) is such that the amine component (A) is present in an amount sufficient to provide 0.5 to 1.1 amino groups (i.e.,NH₂) per epoxy group of the resin component (B). More specifically, components (A) and (B) may be mixed at a weight ratio A:B of 1:99 to 99:1, or 1:9 to 9:1, including for example, 25:75, 30:70, 50:50 (or 1:1).

### Amine Mixtures

At least one of the amine compounds in the curative component (A) is an aromatic diamine represented by Structure 1 or 2: 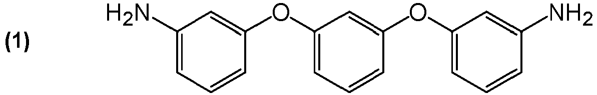 1, 3-Bis(3-aminophenoxy)benzene ("APB133") (Tₘ = 107°C) 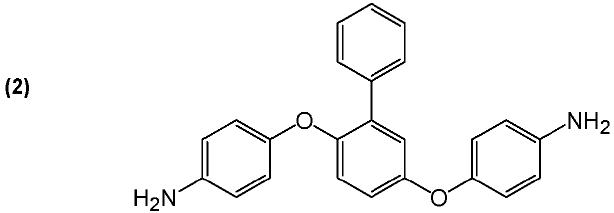 1,4-Bis(4-aminophenoxy)-2-phenylbenzene ("APB144") (Tₘ = 115°C).

The melting point (Tₘ) of APB133 and APB144 are 107°C and 115°C, respectively, as determined by DSC (at ramp rate of 5°C /min). These diamine compounds also have high reactivity with epoxy resins. It has been discovered that the presence of melted APB133 and/or APB144 can depress / suppress the melting temperature of aromatic amines, which originally have higher individual Tₘ as compared to the melting temperature of original APB133 and APB144. Such high Tₘ amines include those with Tₘ above 130°C, for example, 130°C to 250°C. High Tₘ aromatic amines that are normally considered not suitable for two-component RTM formulations can now be used by applying the method disclosed herein. As such, processability of such RTM formulations is improved.

Examples of aromatic amine compounds with higher Tₘ in their original form include the following compounds of Structures 3-6: 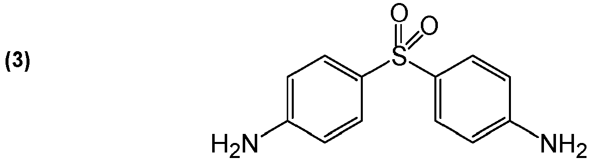 4-,4'-diaminodiphenylsulphone (4,4'-DDS) (Tₘ = 179°C) 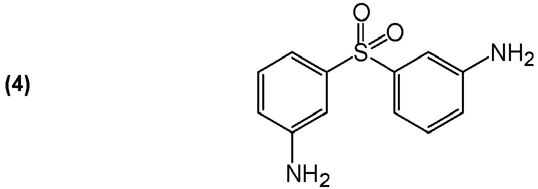 3, 3'-diaminodiphenylsulphone (3,3'-DDS) (Tₘ = 173°C) 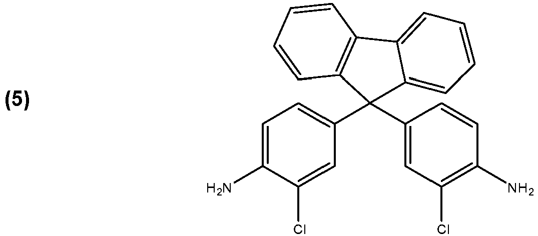 9,9-Bis(4-amino-3-chlorophenyl)fluorene (CAF) (Tₘ = 200°C) 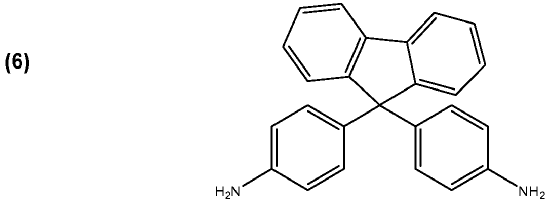 9,9-Bis(4-aminophenyl)fluorene (AF) (Tₘ = 237°C).

The amine compounds of Structures 3 to 6 above are normally solids with high Tₘ as indicated. They can be combined with APB133 and/or APB144 to form an amine blend with a supressed or lower melting point (T_{d}) that is lower than the original individual Tₘ. The amine blend (A) is then combined with the thermosettable resin component (B) at an elevated temperature to form a resin composition (preferably, a homogenous composition) that is suitable for liquid resin infusion such as RTM. The preparation of such resin composition can be carried at temperatures lower than would be possible if the amine compounds were added in their original crystalline form to the resin composition.

Various embodiments of the amine mixture with suppressed melting point include:
i. APB133 and/or APB144 in combination with 3,3'-DDS and 4,4'-DDS;
ii. APB133 and/or APB144 in combination with CAF and AF;
iii. APB133 and/or APB144 in combination with (3,3'-DDS and 4,4'-DDS) and (CAF or AF);
iv. APB133 or APB144 in combination with 3,3'-DDS, 4,4'-DDS, CAF and AF.

The amorphous mixture of amine compounds can be prepared by:
i. heating a mixture of solid amine compounds (which are originally in solid form and have melting temperatures above 50°C) until all amine compounds are melted; and
ii. cooling the mixture of melted amine compounds to a temperature of 35 °C or lower, for example, 20°C to 35 °C, to form an amine blend in a glassy, amorphous phase.

In one embodiment, the mixture of melted amine compounds is cooled to 25°C. The selection and relative amounts of amine compounds can be varied so that the glass transition temperature (T_{g}) of this amorphous mixture is in the range of -50°C to 150°C, as determined by Differential Scanning Calorimetry (DSC) at ramp rate of 5°C/min. In some embodiments, T_{g} of the amorphous mixture is in the range of 0°C to 30°C, and in other embodiments, -10°C to 55°C.

### Thermosettable Resin Component

The thermosettable resin component (B) without any curative may have a viscosity of 1-1000 Poise at a temperature in the range of 20°C to 150 °C prior to being mixed with the amine component (A). In the present disclosure, the viscosity measurements are in steady conditions using a Brookfield viscometer according to the ASTM standard D2196.

The thermosettable resin component (B) contains one or more epoxy monomers, at least one of which is a polyepoxide. The term "polyepoxide" refers a compound that contains more than one epoxide group:

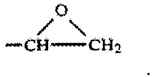

Suitable epoxy monomers include polyglycidyl derivatives of aromatic diamine, aromatic mono primary amines, aminophenols, polyhydric phenols, polyhydric alcohols, polycarboxylic acids. Examples of suitable polyepoxides include polyglycidyl ethers of bisphenols such as bisphenol A, bisphenol F, bisphenol S and bisphenol K. Also suitable are epoxies which are condensation products of formaldehyde and phenol or its substituent derivative, that is, novolac polyglycidyl ether.

Specific examples are tetraglycidyl derivatives of 4,4'-diaminodiphenylmethane (TGDDM), resorcinol diglycidyl ether, triglycidyl-p-aminophenol, triglycidyl-m-aminophenol, bromobisphenol F diglycidyl ether, tetraglycidyl derivatives of diaminodiphenylmethane, trihydroxyphenyl methane triglycidyl ether, polyglycidylether of phenol-formaldehyde novolac, polyglycidylether of o-cresol novolac or tetraglycidyl ether of tetraphenylethane.

Commercially available epoxy resins suitable for use in the epoxy component include N,N,N',N'-tetraglycidyl diamino diphenylmethane (e.g. MY 9663, MY 720, and MY 721 from Huntsman); N,N,N',N'-tetraglycidyl-bis(4-aminophenyl)-1,4-diiso-propylbenzene (e.g. EPON 1071 from Momentive); N,N,N',N'-tetraclycidyl-bis(4-amino-3,5-dimethylphenyl)-1,4-diisopropylbenzene, (e.g. EPON 1072 from Momentive); triglycidyl ethers of p-aminophenol (e.g. MY 0510 from Hunstman); triglycidyl ethers of m-aminophenol (e.g. MY 0610 from Hunstman); diglycidyl ethers of bisphenol A based materials such as 2,2-bis(4,4'-dihydroxy phenyl) propane (e.g. DER 661 from Dow, or EPON 828 from Momentive, and Novolac resins preferably of viscosity 8-20 Pa·s at 25°C; glycidyl ethers of phenol Novolac resins (e.g. DEN 431 or DEN 438 from Dow); di-cyclopentadiene-based phenolic novolac (e.g. Tactix^{®} 556 from Huntsman); diglycidyl 1,2-phthalate; diglycidyl derivative of dihydroxy diphenyl methane (Bisphenol F) (e.g. PY 306 from Huntsman).

The curable epoxy-based composition of the present disclosure may also include a minor amount of tougheners selected from, but are not limited to, thermoplastic polymers (e.g. polyether sulfone (PES), polyamide, polyimide), elastomers (e.g. ATBN), core-shell rubber particles, silica particles. For RTM process, the toughening particles should have particle size of less than 1 micron, for example, 50 nm to 800 nm, as determined by dynamic light scattering, using, for example, a Malvern Zetasizer 2000. The amount of tougheners is less than 20% by weight, in some embodiments, less than 7% by weight based on the total weight of the composition.

### Resin Infusion Method and Manufacturing of Molded Articles

Another aspect of the present disclosure is directed to a liquid resin infusion method or liquid molding method, particularly, RTM and VaRTM. In such method, components (A) and (B) discussed above are mixed prior to infusion or injection at an elevated temperature to form a resin composition having a sufficiently low viscosity for infusion/injection.

The resin composition may have a viscosity of less than 10 Poise, or less than 5 Poise, at a temperature within the range of 90°C to 160°C, or 80°C to 130°C, that is suitable for infusion/injection into the fibrous preform.

In RTM, the fibrous preform is placed in a closed mold, which is heated to an initial temperature temperature, e.g., greater than 25°C, in some embodiments, 90°C to 120°C, followed by injection of the liquid resin composition into the mold to affect infusion of the liquid resin into the preform. The mold may be maintained at a dwell tempertature of 20°C to 220°C during the infusion of the fibrous preform. The temperature of the mold after infusion is completed to affect curing of the resin-infused preform, thereby forming a hardened composite article. The temperature of the mold after is raised after resin infusion is completed to affect curing of the resin-infused preform, thereby forming a hardened composite article.

In VaRTM, the fibrous preform is placed on a one-sided mold enclosed by a flexible vacuum bag and vacuum is applied to pull the liquid resin into the preform.

The preform is composed of one or more layers of reinforcement fibers, which are permeable to liquid resin. When the preform is completely infused with the resin composition, the mold temperature is ramped up to a cure temperature, e.g. in the range from 160°C to 200°C, for a predetermined period of time to allow full curing of the resin composition. The cured product resulting from the described method is a hardened composite article.

The fibrous preform in the present context is an assembly of reinforcement fibers that constitute the reinforcement component of a composite article, and is configured to receive liquid resin via liquid resin infusion such as RTM. The fibrous preform is composed of multiple layers or plies of fibrous material, which may include nonwoven mats, woven fabrics, knitted fabrics, and non-crimped fabrics. A "mat" is a nonwoven textile fabric made of randomly arranged fibers, such as chopped fiber filaments (to produce chopped strand mat) or swirled filaments (to produce continuous strand mat) with a binder applied to maintain its form. Suitable fabrics include those having directional or non-directional aligned fibers in the form of mesh, tows, tapes, scrim, braids, and the like. The fibers in the fibrous layers or fabrics may be organic or inorganic fibers, or mixtures thereof. Organic fibers are selected from tough or stiff polymers such as aramids (including Kevlar), high-modulus polyethylene (PE), polyester, poly-p-phenylene-benzobisoxazole (PBO), and hybrid combinations thereof. Inorganic fibers include fibers made of carbon (including graphite), glass (including E-glass or S-glass fibers), quartz, alumina, zirconia, silicon carbide, and other ceramics. For making high-strength composite structures, such as primary parts of an airplane, the reinforcement fibers preferably have a tensile strength of ≥ 3500 MPa (or ≥ 500 ksi).

The two-part resin system allows the thermosettable resin component and the amine curing agent to be kept separately for the maximum amount of time allowed by the process before the components are combined prior to injection into the mold. The separation of resin and curing agent is advantageous as it minimizes the amount of reaction between the epoxy resins and the amine compounds prior to resin injection into the mold. The result is a resin formulation with improved processing capability and storage stability.

### EXAMPLES

### Example 1

Different amine blends were formed from APB133, APB144, 3,3'-DDS, 4,4'-DDS, CAF and AF, at the weight ratios shown in Table 1.

**TABLE 1**

| Blend ID | APB144 | APB133 | 33'DDS | 44'DDS | CAF | AF (no Cl) | Tₘ of blend (°C) | T_{g} of blend (°C) |
|---|---|---|---|---|---|---|---|---|
| #7 | 6.3 | 43.4 | 11.8 | 38.6 | | | 158 | 14 |
| #11 | 46.4 | 47.6 | 2.2 | | 3.8 | | 112 | 12 |
| #39 | | 50 | 9.2 | | 3.9 | 37 | 185 | 5 |
| #49 | | 8.9 | | 43.5 | 35.4 | 12.2 | 190 | 47 |
| #50 | | 3.0 | 46.0 | 7.0 | 4.0 | 39.0 | 212 | 38 |

In Table 1, Tₘ refers to melting point of the blend. The amine compounds, initially in solid form, were mixed at room temperature (20°C -25°C). Powder blends of the amine mixtures were prepared using pestle and mortar. A DSC was run on the blended amines to determine the temperature at which the blends should be thermally treated to obtain a glassy material. The powder was compacted gently to allow thermal conductivity and place in an oven at a temperature higher than their melting point, 170°C or 190°C, for an hour or at (1) analyzed by DSC to determine their melting point, (2) maintained for 1 hour at the temperature defining the end of the melting peak (about 170°C -190°C). The diamine blends was re-analyzed by DSC at ramp rate of 5°C/min after thermal treatment, looking at eventual re-crystallisation (> 10 J/g) phenomenon or residual melt (< -10 J/g).

### Example 2

An amine mixture (Composition E) was prepared according to the formulation shown in Table 2.

**TABLE 2**

| Components | Weight % |
|---|---|
| 3,3'DDS | 21.65 |
| 4,4'DDS | 21.65 |
| CAF | 3.3 |
| APB133 | 50.0 |
| AF | 3.4 |

The amine mixture was heated in a steel can with stirring at the preparation temperature of 140°C for 20 minutes and then the mixture is allowed to cool to room temperature.

An epoxy-based resin composition composed of multifunctional epoxy resins (PY 306, MY 0510, MY 0610, and MY 721 from Huntsman), PES, and core-shell rubber particles was prepared. Pre-warming of the amine mixture (curative component) and the resin composition (resin component) was carried out separately, then each component was degassed for 45 minutes. The two components were combined in a 1:1 weight ratio and stirred. The resulting mixture was then degassed at 80°C for a further 5 minutes and then transferred into a resin pot for VaRTM processing.

196 gsm Plain Weave carbon fabric was used to form a quasi isotropic layup [+,0,-, 90]₃ₛ, which was then used as a preform for resin infusion. Upon successful resin infusion of the preform at 80°C, the resin-infused preform was cured for 2 hrs at 180 °C following a 2 °C/min ramp from 80 °C.

## Claims

1. A resin infusion method comprising:
a) heating a mixture of solid amine compounds until all amine compounds are melted;
b) cooling the mixture of melted amine compounds to a temperature of 35 °C or lower, preferably, in the range of 20°C to 35°C to form an amine blend (A);
c) combining the amine blend (A) with a thermosettable resin (B), which comprises one or more epoxy monomers, at a temperature effective for forming a liquid resin composition; and
d) infusing a fibrous preform with the liquid resin composition,
wherein the mixture of solid amine compounds at (a) comprises at least three amine compounds, at least one of which is an aromatic diamine having an individual melting point (Tₘ₁) and represented by Structure 1 or 2: 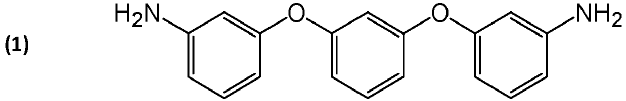 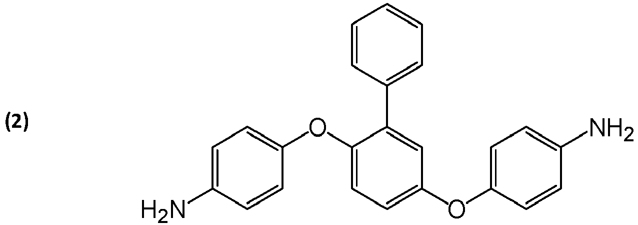 and the other amine compounds are aromatic diamines having an original individual melting point (Tₘ₂), which is higher than Tₘ₁.

2. The method of claim 1, wherein the amine blend (A) has a T_{g} of -50°C to 150°C or 0°C to 30°C, as determined by Differential Scanning Calorimetry (DSC) at ramp rate of 5°C/min.

3. The method of claim 1 or 2, wherein Tₘ₂ is in the range of 130°C to 250°C as determined by DSC at ramp rate of 5°C/min.

4. The method according to any one of the preceding claims, wherein the aromatic diamines with melting point Tₘ₂ are selected from the following Structures 3 to 6:

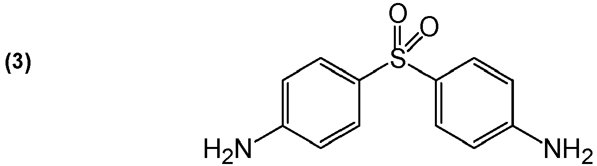

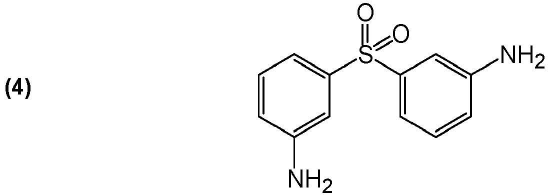

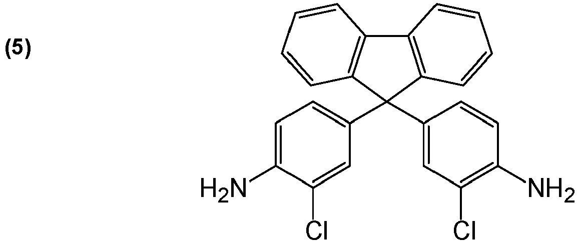

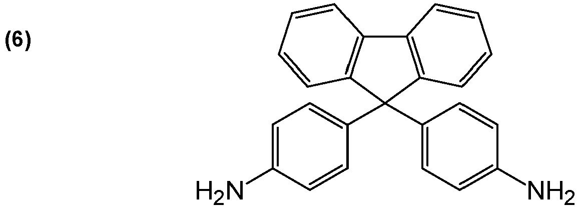

5. The method according to claim 4, wherein the amine blend (A) is selected from the following combinations:
(i) Structure 1 and/or Structure 2 in combination with Structure 3 and Structure 4;
(ii) Structure 1 and/or Structure 2 in combination with Structure 5 and Structure 6;
(iii) Structure 1 and/or Structure 2 in combination with at least one of Structures 3 and 4 and at least one of Structures 5 and 6.

6. The method according to claim 4, wherein the amine blend (A) comprises the aromatic diamine Structure 1 or Structure 2 in combination with (i) the aromatic diamines of Structures 3 to 6, or
(ii) the aromatic diamines of Structures 3, 4 and 5, or
((iii) the aromatic diamines of Structures 3, 4 and 6.

7. The method according to claim 4, wherein the amine blend (A) comprises the aromatic diamine of Structure 1 and/or Structure 2 in combination with (i) the aromatic diamines of Structure 3 or 4, and Structure 5 or 6, or
(ii) the aromatic diamines of Structures 3 and 4.

8. The method according to any one of the preceding claims, wherein the amine blend (A) and the resin (B) are mixed at a weight ratio (A:B) of 1:99 to 99:1, or 1:9 to 9:1, or 30:70 to 50:50.

9. The method according to any one of the preceding claims, wherein, at (a), the mixture of solid amine compounds melt at a depressed temperature (T_{d}) that is lower than Tₘ₂, preferably, T_{d} is lower than 170°C.

10. The method according to any one of the preceding claims, wherein the amine blend (A) is in a glassy, amorphous phase at a temperature in the range of 20°C to 35 °C.17.

11. The method to any one of the preceding claims, further comprising:
placing the fibrous preform in a closed mold and heating the mold prior to injecting the liquid resin composition into the mold to affect infusion of the liquid resin composition into the preform, preferably,
the mold is maintained at a dwell temperature of 20°C to 220°C during the infusion of the fibrous preform.

12. The method of claim 11, wherein the liquid resin composition has a viscosity of less than 10 Poise, preferably less than 5 Poise, at a temperature in the range of 90°C to 160°C during injection into the mold.

13. The method according to claim 11 or 12 further comprising raising the temperature of the mold after resin infusion is completed to affect curing of the resin-infused preform, thereby forming a hardened composite article.

14. A two-component resin system for liquid resin infusion, comprising:
(A) an amine blend of at least three different amine compounds; and
(B) a thermosettable resin comprising one or more epoxy monomers,
wherein components (A) and (B) are physically separated from each other, and are combinable to form a substantially homogenous resin composition, and
wherein at least one of the amine compounds of component (A) is an aromatic diamine represented by Structure 1 or 2: 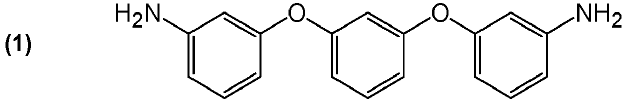 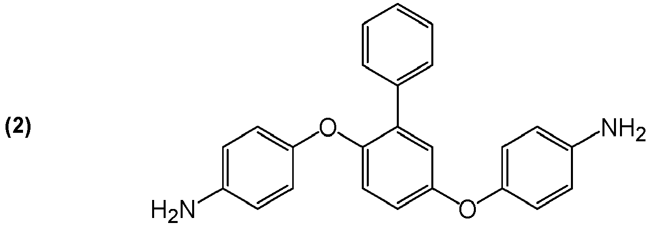 and the other amine compound is an aromatic diamines selected from Structures 3-6:

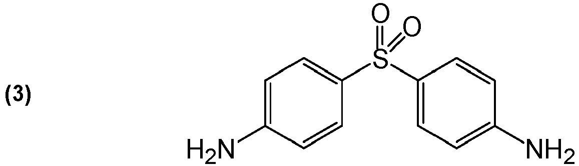

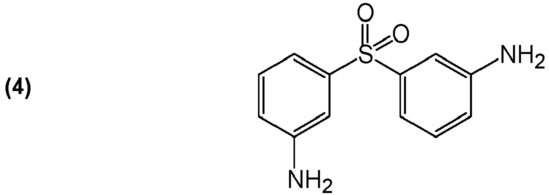

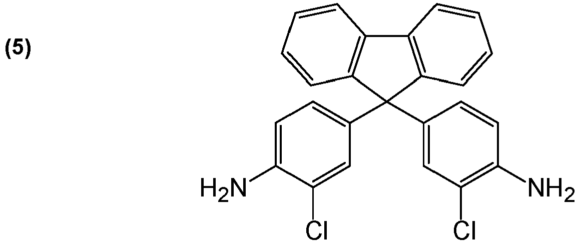

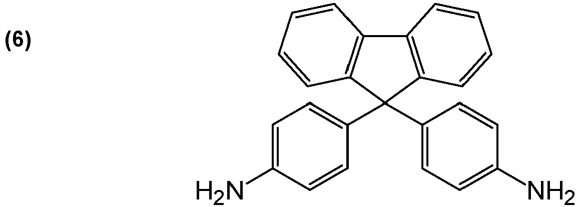

15. The resin system according to claim 14 wherein the amine blend (A)
has a T_{g} of -50°C to 150°C, in some embodiments, 0°C to 30°C, as determined by Differential Scanning Calorimetry (DSC) at ramp rate of 5°C/min, and
wherein the amine blend (A) is in a glassy, amorphous phase at a temperature in the range of 20°C to 35 °C, including 25°C.

## Patentansprüche

1. Harzinfusionsverfahren, umfassend:
a) Erhitzen eines Gemischs von festen Aminverbindungen, bis alle Aminverbindungen geschmolzen sind;
b) Abkühlen des Gemischs von geschmolzenen Aminverbindungen auf eine Temperatur von 35 °C oder darunter, vorzugsweise in dem Bereich von 20 °C bis 35 °C, um eine Aminmischung (A) zu bilden;
c) Kombinieren der Aminmischung (A) mit einem wärmehärtbaren Harz (B), das ein oder mehrere Epoxymonomere umfasst, bei einer Temperatur, die wirksam ist, um eine flüssige Harzzusammensetzung zu bilden; und
d) Infundieren einer Faservorform mit der flüssigen Harzzusammensetzung,
wobei das Gemisch von festen Aminverbindungen bei (a) wenigstens drei Aminverbindungen umfasst, von denen wenigstens eine ein aromatisches Diamin ist, das einen individuellen Schmelzpunkt (Tₘ₁) aufweist und von Struktur 1 oder 2 dargestellt wird: 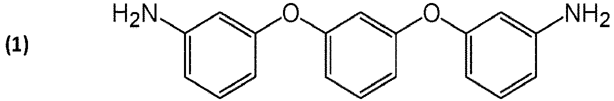 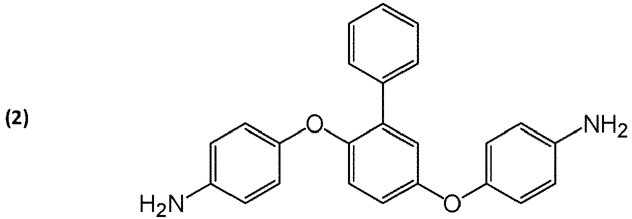 und die anderen Aminverbindungen aromatische Diamine sind, die einen eigenen individuellen Schmelzpunkt (Tₘ₂), der höher als Tₘ₁ ist, aufweisen.

2. Verfahren gemäß Anspruch 1, wobei die Aminmischung (A) eine T_{g} von -50 °C bis 150 °C oder 0 °C bis 30 °C, wie bestimmt durch Differentialscanningkalorimetrie (DSC) mit einer Rampenrate von 5 °C/min, aufweist.

3. Verfahren gemäß Anspruch 1 oder 2, wobei Tₘ₂ in dem Bereich von 130 °C bis 250 °C, wie bestimmt durch DSC mit einer Rampenrate von 5 °C/min, liegt.

4. Verfahren gemäß einem der vorstehenden Ansprüche, wobei die aromatischen Diamine mit einem Schmelzpunkt von Tₘ₂ aus den folgenden Strukturen 3 bis 6 ausgewählt sind:

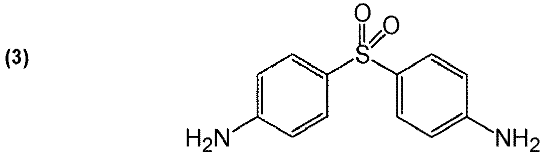

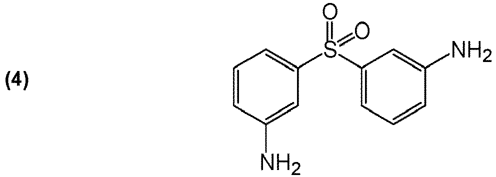

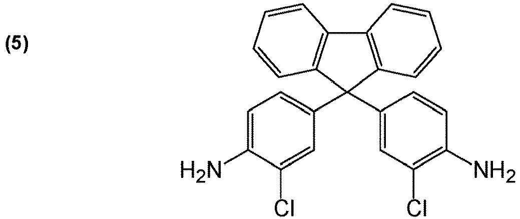

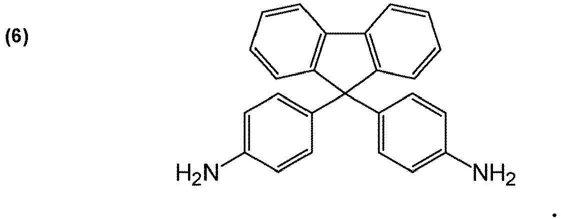

5. Verfahren gemäß Anspruch 4, wobei die Aminmischung (A) aus den folgenden Kombinationen ausgewählt ist:
(i) Struktur 1 und/oder Struktur 2 in Kombination mit Struktur 3 und Struktur 4;
(ii) Struktur 1 und/oder Struktur 2 in Kombination mit Struktur 5 und Struktur 6;
(iii) Struktur 1 und/oder Struktur 2 in Kombination mit wenigstens einer der Strukturen 3 und 4 und wenigstens einer der Strukturen 5 und 6.

6. Verfahren gemäß Anspruch 4, wobei die Aminmischung (A) das aromatische Diamin der Struktur 1 oder Struktur 2 in Kombination mit (i) den aromatischen Diaminen der Strukturen 3 bis 6 oder
(ii) den aromatischen Diaminen der Strukturen 3, 4 und 5 oder
(iii) den aromatischen Diaminen der Strukturen 3, 4 und 6 umfasst.

7. Verfahren gemäß Anspruch 4, wobei die Aminmischung (A) das aromatische Diamin der Struktur 1 und/oder Struktur 2 in Kombination mit (i) den aromatischen Diaminen der Struktur 3 oder 4 und Struktur 5 oder 6 oder
(ii) den aromatischen Diaminen der Strukturen 3 und 4 umfasst.

8. Verfahren gemäß einem der vorstehenden Ansprüche, wobei die Aminmischung (A) und das Harz (B) in einem Gewichtsverhältnis (A:B) von 1:99 bis 99:1 oder 1:9 bis 9:1 oder 30:70 bis 50:50 gemischt werden.

9. Verfahren gemäß einem der vorstehenden Ansprüche, wobei bei (a) das Gemisch von festen Aminverbindungen bei einer erniedrigten Temperatur (T_{d}), die niedriger als Tₘ₂ ist, schmilzt, wobei T_{d} vorzugsweise niedriger als 170 °C ist.

10. Verfahren gemäß einem der vorstehenden Ansprüche, wobei die Aminmischung (A) in dem Bereich von 20 °C bis 35 °C in einer glasartigen amorphen Phase vorliegt. 17.

11. Verfahren gemäß einem der vorstehenden Ansprüche, ferner umfassend:
Platzieren der Faservorform in einem geschlossenen Formwerkzeug und Erhitzen des Formwerkzeugs vor Einspritzen der flüssigen Harzzusammensetzung in das Formwerkzeug, um Infusion der flüssigen Harzzusammensetzung in die Vorform zu bewirken,
wobei das Formwerkzeug vorzugsweise während der Infusion der Faservorform bei einer Haltetemperatur von 20 °C bis 220 °C gehalten wird.

12. Verfahren gemäß Anspruch 11, wobei die flüssige Harzzusammensetzung während des Einspritzens in das Formwerkzeug eine Viskosität von kleiner als 10 Poise, vorzugsweise kleiner als 5 Poise, bei einer Temperatur in dem Bereich von 90 °C bis 160 °C aufweist.

13. Verfahren gemäß Anspruch 11 oder 12, ferner umfassend Erhöhen der Temperatur des Formwerkzeugs nach dem Abschluss der Harzinfusion, um Härten der harzinfundierten Vorform zu bewirken, um so einen gehärteten Verbundstoffgegenstand zu bilden.

14. Zweikomponenten-Harzsystem für die Flüssigharzinfusion, umfassend:
(A) eine Aminmischung von wenigstens drei verschiedenen Aminverbindungen; und
(B) ein wärmehärtbares Harz, das ein oder mehrere Epoxymonomere umfasst,
wobei die Komponenten (A) und (B) physisch voneinander getrennt sind und kombinierbar sind, um eine im Wesentlichen homogene Harzzusammensetzung zu bilden, und
wobei wenigstens eine der Aminverbindungen der Komponente (A) ein aromatisches Diamin ist, das von Struktur 1 oder 2 dargestellt wird: 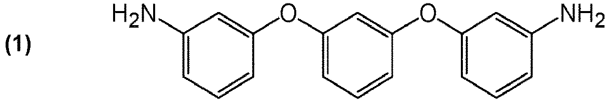 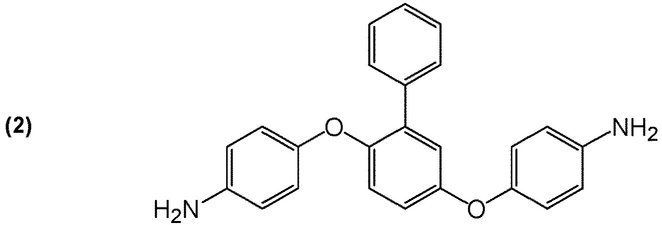 und die andere Aminverbindung ein aromatisches Diamin ist, das aus den Strukturen 3-6 ausgewählt ist:

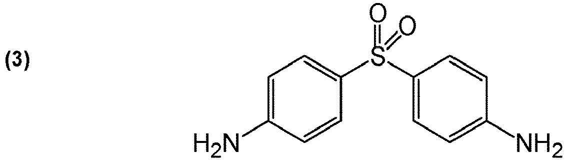

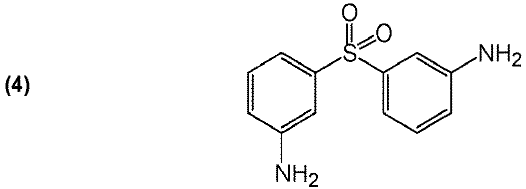

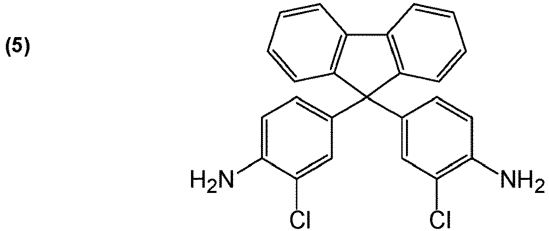

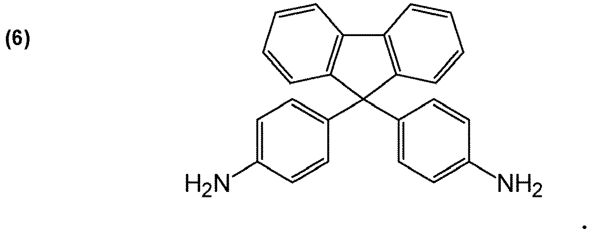

15. Harzsystem gemäß Anspruch 14, wobei die Aminmischung (A) eine T_{g} von -50 °C bis 150 °C, bei manchen Ausführungsformen 0 °C bis 30 °C, wie bestimmt durch Differentialscanningkalorimetrie (DSC) mit einer Rampenrate von 5 °C/min, aufweist und
wobei die Aminmischung (A) bei einer Temperatur in dem Bereich von 20 °C bis 35 °C, einschließlich 25 °C, in einer glasartigen amorphen Phase vorliegt.

## Revendications

1. Procédé d'infusion de résine comprenant :
a) le chauffage d'un mélange de composés solides de type amine jusqu'à ce que tous les composés de type amine soient fondus ;
b) le refroidissement du mélange de composés de type amine fondus à une température de 35 °C ou moins, préférablement dans la plage de 20 °C à 35 °C pour former un mélange (A) d'amines ;
c) la combinaison du mélange (A) d'amines avec une résine thermodurcissable (B), qui comprend un ou plusieurs monomères de type époxy, à une température efficace pour la formation d'une composition de résine liquide ; et
d) l'infusion d'une préforme fibreuse avec la composition de résine liquide,
le mélange de composés solides de type amine en (a) comprenant au moins trois composés de type amine, au moins l'un desquels étant une diamine aromatique possédant un point de fusion individuel (Tₘ₁) et représentée par la Structure 1 ou 2 ; 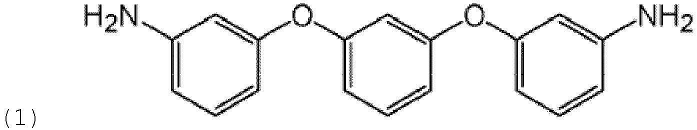 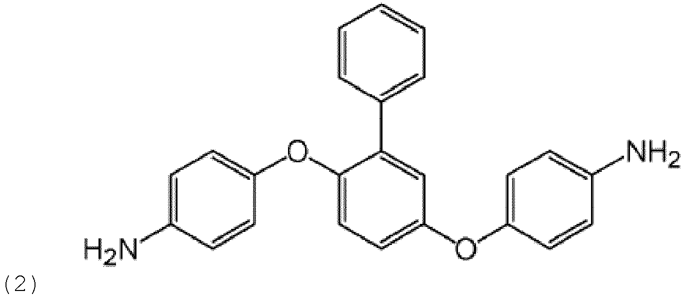 et les autres composés de type amine étant des diamines aromatiques possédant un point de fusion individuel (Tₘ₂) d'origine, qui est supérieur à Tₘ₁.

2. Procédé selon la revendication 1, le mélange (A) d'amines possédant une T_{g} de -50 °C à 150 °C ou 0 °C à 30 °C, telle que déterminée par Calorimétrie Différentielle à Balayage (DSC) à une vitesse de rampe de 5 °C/min.

3. Procédé selon la revendication 1 ou 2, Tₘ₂ étant dans la plage de 130 °C à 250 °C telle que déterminée par DSC à une vitesse de rampe de 5 °C/min.

4. Procédé selon l'une quelconque des revendications précédentes, les diamines aromatiques dotées d'un point de fusion Tₘ₂ étant choisies parmi les Structures suivantes 3 à 6 :

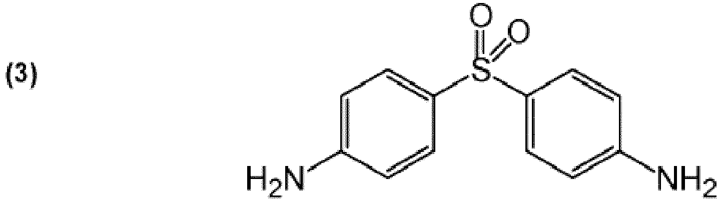

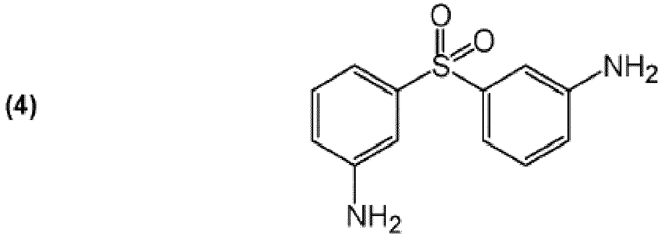

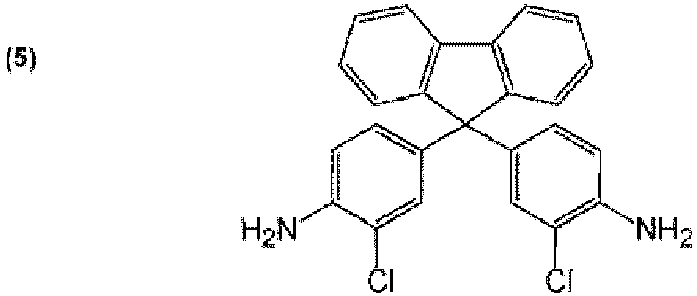

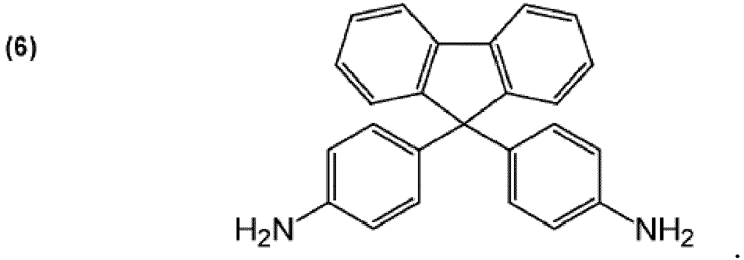

5. Procédé selon la revendication 4, le mélange (A) d'amines étant choisi parmi les combinaisons suivantes :
(i) la Structure 1 et/ou la Structure 2 en combinaison avec la Structure 3 et la Structure 4 ;
(ii) la Structure 1 et/ou la Structure 2 en combinaison avec la Structure 5 et la Structure 6 ;
(iii) la Structure 1 et/ou la Structure 2 en combinaison avec au moins une parmi les Structures 3 et 4 et au moins l'une parmi les Structures 5 et 6.

6. Procédé selon la revendication 4, le mélange (A) d'amines comprenant la diamine aromatique de Structure 1 et de Structure 2 en combinaison avec (i) les diamines aromatiques de Structures 3 à 6, ou
(ii) les diamines aromatiques de Structures 3, 4 et 5, ou
(iii) les diamines aromatiques de Structures 3, 4 et 6.

7. Procédé selon la revendication 4, le mélange (A) d'amines comprenant la diamine aromatique de Structure 1 et/ou de Structure 2 en combinaison avec (i) les diamines aromatiques de Structure 3 ou 4, et de Structure 5 ou 6, ou
(ii) les diamines aromatiques de Structures 3 et 4.

8. Procédé selon l'une quelconque des revendications précédentes, le mélange (A) d'amines et la résine (B) étant mélangés à raison d'un rapport en poids (A:B) de 1:99 à 99:1, ou 1:9 à 9:1, ou 30:70 à 50:50.

9. Procédé selon l'une quelconque des revendications précédentes, dans lequel, en (a), le mélange de composés solides de type amine fond à une température abaissée (T_{d}) qui est inférieure à Tₘ₂, préférablement, T_{d} est inférieure à 170 °C.

10. Procédé selon l'une quelconque des revendications précédentes, le mélange (A) d'amines étant dans une phase vitreuse, amorphe à une température dans la plage de 20 °C à 35 °C.

11. Procédé selon l'une quelconque des revendications précédentes, comprenant en outre :
le placement de la préforme fibreuse dans un moule fermé et le chauffage du moule avant l'injection de la composition de résine liquide dans le moule pour effectuer l'infusion de la composition de résine liquide dans la préforme, préférablement,
le moule étant maintenu à une température de maintien de 20 °C à 220 °C pendant l'infusion de la préforme fibreuse.

12. Procédé selon la revendication 11, la composition de résine liquide possédant une viscosité inférieure à 10 Poises, préférablement inférieure à 5 Poises, à une température dans la plage de 90 °C à 160 °C pendant l'injection dans le moule.

13. Procédé selon la revendication 11 ou 12, comprenant en outre l'élévation de la température du moule après la fin de l'infusion de résine pour effectuer le durcissement de la préforme infusée par la résine, formant ainsi un article composite durci.

14. Système de résine à deux composants pour une infusion de résine liquide, comprenant :
(A) un mélange d'amines composées d'au moins trois composés différents de type amine ; et
(B) une résine thermodurcissable comprenant un ou plusieurs monomères de type époxy,
les composants (A) et (B) étant séparés physiquement l'un de l'autre, et étant combinables pour former une composition de résine sensiblement homogène, et
au moins l'un des composés de type amine du composant (A) étant une diamine aromatique représentée par la Structure 1 ou 2 : 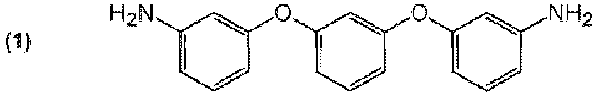 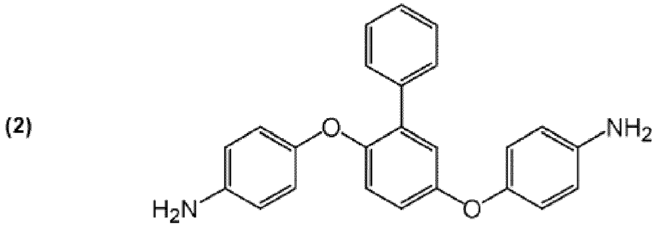 et l'autre composé de type amine étant une diamine aromatique choisie parmi les Structures 3 à 6 :

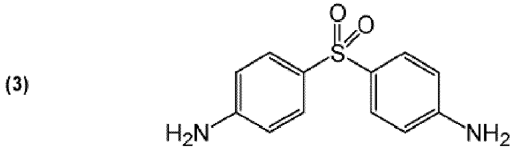

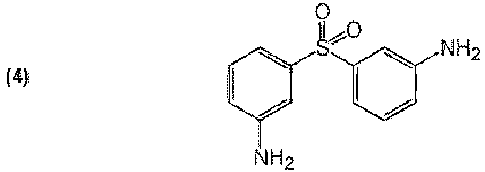

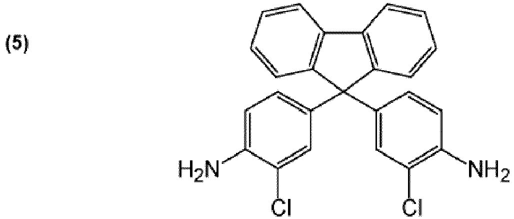

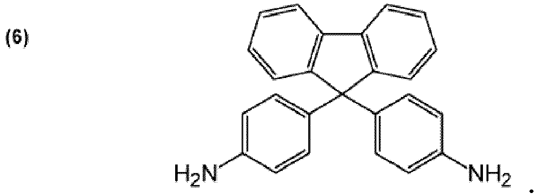

15. Système de résine selon la revendication 14, le mélange (A) d'amines possédant une T_{g} de -50 °C à 150 °C, dans certains modes de réalisation, de 0 °C à 30 °C, telle que déterminée par Calorimétrie Différentielle à Balayage (DSC) à une vitesse de rampe de 5 °C/min, et
le mélange (A) d'amines étant dans une phase vitreuse, amorphe à une température dans la plage de 20 °C à 35 °C, y compris 25 °C.
